# FASCICULE DE BREVET EUROPEEN

(11) **EP 0 668 464 B1**
(45) Date de publication et mention de la délivrance du brevet: **29.11.2000**
(21) Numéro de dépôt: 95400001.4
(22) Date de dépôt: 02.01.1995
(51) Int. Cl.: F16L 11/04, F16L 11/10

(54) **Tuyau souple pour le transport de liquides, notamment volatils, ou de gaz**
Schlauch zum Transport von Flüssigkeiten, insbesondere von flüchtigen Flüssigkeiten, oder Gasen
Hose for conveying liquids, particularly volatile liquids, or gases

(30) Priorité: 09.02.1994 FR 9401447
(43) Date de publication de la demande: 23.08.1995
(73) Titulaire: HUTCHINSON, 75008 Paris (FR)
(72) Inventeur: Mahin, Daniel, F-37510 Savonnieres (FR); Blin, Philippe, F-37260 Monts (FR)
(74) Mandataire: Doireau, Marc

(56) Documents cités:
- FR-A- 2 689 956
- US-A- 3 561 493
- US-A- 4 652 475
- US-A- 4 907 625

## Description

L'invention concerne un tuyau souple pour le transport de liquides, notamment volatils, ou de gaz.

Dans le domaine du transport de liquides ou de gaz, les tuyauteries utilisées sont généralement métalliques, car elles sont les plus imperméables aux liquides et/ou aux gaz transportés. Les tuyauteries réalisées en des matériaux non métalliques, tels que des polymères, ne sont pas suffisamment étanches jusqu'à maintenant pour être en contact permanent avec des liquides ou des gaz, si bien qu'elles ne sont utilisées que pour assurer des opérations de transfert et non de transport où les liquides ou gaz sont au contact permanent des tuyauteries. Cependant, dans les tuyauteries métalliques, la corrosion résultant du liquide ou du gaz transporté, la présence de raccords, coudés ou non, entre deux sections de tuyauterie et les mouvements de terrain, sont des facteurs importants de risques de fuites après quelques années d'utilisation.

Pour un transport de liquides ou de gaz sur de courtes distances, la tendance actuelle est de substituer à ces tuyauteries métalliques des tuyauteries souples qui offrent notamment l'avantage de faciliter leur mise en place et de permettre des prises de coudes serrés en toute direction sans avoir recours à des raccords coudés.

Cependant, il faut également que ces tuyauteries, outre leur souplesse, présentent d'excellentes caractéristiques d'imperméabilité et de résistance chimique aux liquides ou aux gaz transportés, et de tenue mécanique dans les conditions d'exploitation.

Pour des tuyauteries en pur caoutchouc par exemple, on atteint généralement dans le cas des fluides de réfrigération type CFC ou HCFC (fréon R12 ; fréon R22 ; forane 134A) des niveaux de perméation au travers de la tuyauterie de l'ordre de 60 gr/m² de surface exposée et par jour. Dans le cas de carburants type super sans plomb, on observe couramment des niveaux de perméation de l'ordre de 30 gr/m² de surface exposée et par jour. Ces niveaux de perméation ont pu être abaissés par des tuyaux souples utilisant, au contact du fluide, une couche de matériau thermoplastique dont l'épaisseur est de l'ordre de 1,5 mm pour conserver la souplesse et qui présente un meilleur niveau d'imperméabilité que le caoutchouc. Ce type de matériau associé au caoutchouc est généralement déposé en une seule couche et est choisi parmi les thermoplastiques type polyamides ou polyoléfines pour des tuyaux mixtes thermoplastique/caoutchouc dont les niveaux de perméation peuvent être abaissés à environ 10 à 15 gr/m² par jour pour les fluides de réfrigération précités et à environ 3 à 5 gr/m² par jour pour des carburants du type super sans plomb.

Pour obtenir de plus hauts degrés d'imperméabilité, il faut avoir recours à des films barrière. Or, ces films, à base de polyester tel que du MYLAR® de polytétrafluoréthylène tel que du TEFLON®, d'un copolymère éthylène vinyl alcool tel que du SELAR® ou de polyfluorure de vinyl tel que du TEDLAR®, par exemple, ont un module d'élasticité élevé qui est généralement supérieur à 3000 daN/cm². Si on adjoint un tel film à des tuyaux en caoutchouc par exemple, dont le module d'élasticité est très faible et inférieur à 150 daN/cm², les déformations des tuyaux peuvent entraîner des plis ou des cassures au niveau du film barrière d'étanchéité. En plus, un tel film ne possède pas toujours une bonne résistance chimique aux fluides transportés.

Dans ces tuyaux souples, une couche de liaison est généralement interposée entre la barrière d'étanchéité et le corps du tuyau pour faciliter notamment les problèmes d'adhérisation.

Cependant, ces tuyaux souples sont fabriqués selon des petits diamètres intérieurs, jusqu'à 1 cm environ, car leur structure n'est pas adaptée pour des tuyaux de plus grands diamètres pour lesquels les déformations mécaniques entraînées par des rayons de courbure importants augmentent les risques de détérioration du film barrière par suite notamment d'une ovalisation des tuyaux.

Un tuyau souple de petit diamètre est notamment décrit dans le document FR-A-2 689 956. Ce tuyau comprend au moins deux couches, et plus généralement une couche interne formée d'une résine contenant du fluor pour réaliser une barrière d'étanchéité au fluide transporté, une couche intermédiaire formée d'une résine synthétique autre que celle utilisée pour réaliser la couche interne, et une couche externe de protection. Ces différentes couches sont déposées par vulcanisation.

Le but principal de l'invention est de concevoir un tuyau souple, notamment de grand diamètre intérieur, satisfaisant toutes les caractéristiques précitées de souplesse, de très bonne imperméabilité, de résistance chimique et de tenue mécanique, de manière à pouvoir se substituer avantageusement et en toute sécurité à un tuyau métallique et sans présenter les fragilités mécaniques évoquées précédemment.

A cet effet, l'invention propose un tuyau souple pour le transport de liquides, notamment volatils, ou de gaz, d'un grand diamètre intérieur au moins égal à 19 mm et du type comprenant au moins un film en un matériau rigide, à module d'élasticité élevé et formant barrière d'étanchéité au liquide ou au gaz transporté, ledit film étant enrobé d'au moins un film intermédiaire et d'un corps en un matériau à faible module d'élasticité, tel qu'un élastomère synthétique, qui donne la souplesse requise au tuyau, ledit corps du tuyau comprenant une spirale en matériau thermo-plastique pour compléter la protection du film barrière, tuyau qui est caractérisé en ce que le film intermédiaire est réalisé en un matériau qui est choisi de manière à ce que son module d'élasticité est inférieur à celui du film barrière et supérieur à celui du corps, et en ce qu'il est constitué, de l'intérieur vers l'extérieur :
- par un film thermoplastique d'une épaisseur de l'ordre de 0,3 mm et en un matériau du type polyéthylène,
- par un film barrière constitué d'un copolymère éthylène vinyl alcool et d'une épaisseur de l'ordre de 35 microns,
- par un film intermédiaire d'une épaisseur de l'ordre de 0,3 mm et de même constitution que le film,
- par une sous-couche en un matériau élastomère synthétique adhérée au film intermédiaire et d'une épaisseur de l'ordre de 2 mm,
- par une tresse textile en fils de polyester,
- par un revêtement en un matériau élastomère synthétique d'une épaisseur de l'ordre de 3 mm, et
- par une spirale thermoplastique d'une hauteur de l'ordre de 3mm, avec un pas de l'ordre de 10 mm, enchassée dans le revêtement et parfaitement adhérée à celui-ci.

D'une manière générale, le film intermédiaire est choisi de telle façon que son module d'élasticité et son épaisseur optimisent les prises de rayon et la souplesse du tuyau en fonction des modules d'élasticité et des épaisseurs du film barrière et du corps du tuyau.

Ainsi, l'optimisation du choix des modules d'élasticité dégressifs des matériaux entourant le film barrière et des épaisseurs de ces matériaux et du film, et la présence de la spirale thermoplastique sont de nature à protéger efficacement le film barrière lors d'une prise de rayon relativement importante.

Selon une autre caractéristique de l'invention, le tuyau comprend plusieurs films barrière, et au moins un film en un matériau thermoplastique intercalé entre deux films barrière consécutifs.

Selon une autre caractéristique de l'invention, la spirale thermoplastique est adhérée ou enchassée autour du corps du tuyau.

En variante, la spirale thermoplastique peut être noyée dans le corps du tuyau.

Selon une autre caractéristique de l'invention, le contact permanent avec le liquide ou le gaz transporté est assuré par un film interne de bonne résistance chimique et de bonne tenue mécanique.

En variante, le film barrière est déposé sur une face d'un support textile par enduction ou calandrage, l'autre face du support étant au contact permanent du liquide ou du gaz transporté.

Dans cette forme de réalisation, le support textile protège également le film barrière, et ce dernier peut avoir une épaisseur plus réduite, mais dans des limites assurant néanmoins une très bonne étanchéité.

A titre d'exemple :
- le film barrière est en un matériau hautement imperméable, tel que ceux indiqués précédemment, par exemple, chaque film pouvant être lui-même constitué de plusieurs films, et
- le film intercalaire en matériau thermoplastique a un module d'élasticité inférieur à 3000 daN/cm² est choisi dans le groupe comprenant notamment les polyéthylènes, les polyamides, les polyvinyles chlorés et les polypropylènes, ledit film ayant une épaisseur optimisée en fonction de l'épaisseur du film barrière.

Enfin, selon une autre caractéristique de l'invention, le corps du tuyau comprend une structure de renfort à base de fils textiles ou métalliques pour assurer une bonne tenue en pression.

Selon un avantage important de l'invention, le tuyau souple du fait de son excellente imperméabilité et de sa résistance chimique, peut être exposé pendant une très longue durée au liquide ou au gaz transporté, par exemple plusieurs années en continu sans risque de détérioration, et peut à ce titre se substituer avantageusement et en toute sécurité aux traditionnelles tuyauteries métalliques.

A titre d'exemple, un tuyau souple selon l'invention a une perméabilité très faible qui a été mesurée comme étant à peine de 1 gr/m² de surface exposée et par jour pour un carburant type super sans plomb.

Selon un autre avantage de l'invention, la paroi interne du tuyau souple en contact avec le liquide ou le gaz transporté est lisse pour éviter des pertes de charge et des turbulences.

Selon encore un autre avantage de l'invention, la mise en place de tuyauteries souples, en poste fixe, est grandement facilitée par la souplesse du tuyau qui permet des prises de coudes serrés en toute direction et ceci quel que soit le diamètre de ces tuyauteries.

A titre d'exemple, un tuyau souple selon l'invention, d'un diamètre de 40 mm, peut tenir une pression de l'ordre de 10 bar et présenter un rayon de courbure de 300 mm sans se casser ni s'aplatir.

Ce type de tuyau peut avantageusement être construit avec une gamme de diamètres intérieurs très étendue.

Les principaux domaines d'application des tuyaux souples selon l'invention sont par exemple le transport de fluides réfrigérants type CFC ou HCFC, de solvants volatils courants de gaz liquéfiés type GPL, de carburants classiques et à taux d'alcool élevé.

D'autres avantages, caractéristiques et détails de l'invention ressortiront de la description explicative qui va suivre faite en référence aux dessins annexés, donnés uniquement à titre d'exemple et dans lesquels :
- la figure 1 est une demi-coupe longitudinale partielle d'un tuyau selon un mode de réalisation de l'invention, et
- les figures 2 et 3 sont des demi-coupes longitudinales partielles d'un tuyau selon deux variantes de réalisation de l'invention.

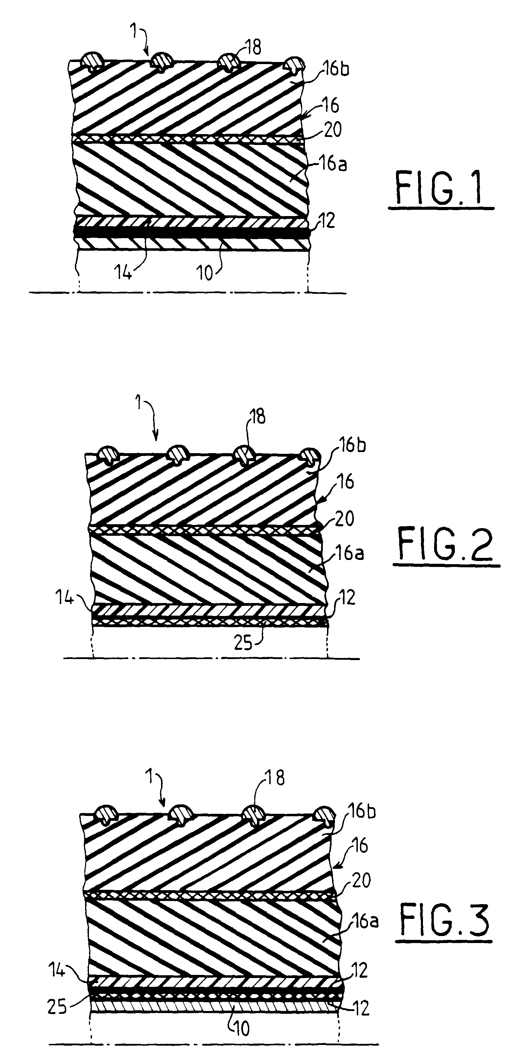

Un tuyau 1 selon l'invention et tel que représenté à la figure 1, comprend globalement de l'intérieur vers l'extérieur :
- au moins un film 10 offrant une résistance chimique au liquide ou au gaz transporté alliée avec une bonne tenue mécanique,
- au moins un film rigide 12 formant une très bonne barrière d'étanchéité au liquide transporté et ayant nécessairement un module d'élasticité élevé,
- au moins un film intermédiaire 14 dont la fonction sera explicitée plus loin,
- une couche 16 formant le corps du tuyau, donnant la souplesse requise au tuyau et ayant un module d'élasticité faible, et
- une spirale thermoplastique 18 rapportée sur la couche 16.

Le film 10 qui offre une bonne résistance chimique au liquide ou au gaz transporté est constitué en un matériau semi-rigide pour assurer également une tenue mécanique suffisante pour la résitance à la compression nécessitée par la tenue aux dispositifs de raccordement du tuyau. Le matériau est par exemple choisi dans le groupe comprenant notamment les polyéthylènes, les polyamides, les polyvinyles chlorés et les polypropylènes.

Le film barrière 12 est constitué en un matériau hautement imperméable, tel que du polyester, du polytétrafluoréthylène, un copolymère éthylène vinyl alcool ou du polyfluorure de vinyl par exemple, un tel matériau ayant, par nature, un module d'élasticité élevé supérieur à 3000 daN/cm², la valeur de ce module étant le plus souvent de l'ordre de 30.000 daN/cm².

Le film intermédiaire 14 est choisi de manière à présenter un module d'élasticité intermédiaire entre ceux du film barrière 12 et de la couche 16 formant le corps du tuyau. Ce film est avantageusement constitué en un matériau thermoplastique choisi également dans le groupe précité des matériaux constituant le film 10 offrant une résistance chimique au liquide ou au gaz transporté. Ce film intermédiaire 14 permet d'une part, de protéger le film barrière 12 lorsque le tuyau 1 subit des déformations et, d'autre part, de faciliter l'adhérisation par collage du film barrière 12 sur la couche 16 formant le corps du tuyau.

La couche 16 est par exemple constituée en un élastomère synthétique dont le module d'élasticité est de l'ordre de 150 daN/cm². L'épaisseur de la couche 16 est choisie de manière à optimiser au mieux les rayons de courbure et la souplesse du tuyau.

Une couche de renfort 20 est intégrée à la couche 16 formant le corps du tuyau pour obtenir une bonne tenue en pression, cette couche 20 étant par exemple une tresse textile en fils synthétiques ou métalliques. Dans ce cas, le corps du tuyau est constitué d'une sous-couche 16a et d'un revêtement 16b avec interposition de la couche de renfort 20.

La spirale thermoplastique 18 adhérée autour du corps du tuyau et de préférence enchassée dans celui-ci, résiste à l'abrasion, assure la tenue en courbure du tuyau, évite toute ovalisation ou aplatissement du tuyau en cas de dépression et facilite le coulissement du tuyau lorsque ce dernier est monté à l'intérieur d'une gaine de protection.

En variante, la spirale thermoplastique 18 peut être noyée dans le corps du tuyau.

D'une manière générale, le tuyau peut comprendre plusieurs films barrière 12, un film intermédiaire 14 étant avantageusement intercalé entre deux films barrière 12. En outre, chaque film barrière 12 peut être lui-même constitué de plusieurs films.

D'une manière générale, les épaisseurs du film intermédiaire 14 et de la couche 16 formant le corps du tuyau vont varier en fonction des modules d'élasticité des matériaux utilisés. Concrètement, ces épaisseurs vont être choisies pour ne pas donner au tuyau une raideur trop importante susceptible de nuire à sa souplesse. Pour une raideur constante, l'épaisseur sera plus grande si le module d'élasticité est faible.

A titre d'exemple, le tuyau 1 présente la structure suivante, de l'intérieur vers l'extérieur :
- un film thermoplastique 10 d'une épaisseur de l'ordre de 0,3 mm et en un matériau du type polyéthylène déposé par enrubannage,
- un film barrière 12 constitué d'un copolymère éthylène vinyl alcool, d'une épaisseur de l'ordre de 35 microns et déposé par enrubannage en sens croisé,
- un film intermédiaire 14 d'une épaisseur de l'ordre de 0,3 mm et de même constitution que le film 10,
- une sous-couche 16a en un matériau élastomère synthétique adhérée au film intermédiaire 14 et d'une épaisseur de l'ordre de 2 mm,
- une tresse textile 20 en fils de polyester permettant d'assurer une pression en service de l'ordre de 10 bar,
- un revêtement 16b en un matériau élastomère synthétique d'une épaisseur de l'ordre de 3 mm, et
- une spirale thermoplastique 18 d'une hauteur de l'ordre de 3 mm avec un pas de l'ordre de 10 mm, enchassée dans le revêtement 16b et parfaitement adhérée à celui-ci.

Une telle structure est particulièrement bien adaptée pour des tuyaux ayant un diamètre intérieur au moins égal à 19 mm (3/4 de pouce).

La figure 2 représente une variante de réalisation d'un tuyau 1 conforme à l'invention.

Selon cette variante, le film barrière 12 est déposé par enduction ou calandrage sur une face d'un film textile 25 dont l'autre face est au contact permanent du liquide ou du gaz transporté. Bien entendu, ce film textile 25 est choisi dans un matériau ayant une bonne résistance chimique et une bonne tenue mécanique.

La présence de ce film textile 25 permet notamment de renforcer la résistance mécanique du film barrière 12 et de diminuer éventuellement l'épaisseur de ce dernier sans nuire aux caractéristiques d'imperméabilité du film barrière.

Selon l'autre variante de réalisation illustrée à la figure 3, le film barrière est constitué de deux films barrière 12 avec interposition d'un film textile 25. Dans ce cas, on prévoit avantageusement un film interne 10 qui est au contact permanent du liquide ou gaz transporté, ce film 10 ayant par exemple la même constitution que celui du mode de réalisation de la figure 1.
D'une manière générale, les matériaux utilisés sont avantageusement sélectionnés pour obtenir une excellente adhésion entre les films et/ou couches lors de la fabrication du tuyau.

## Revendications

1. Tuyau souple pour le transport de liquides, notamment volatils, ou de gaz, d'un grand diamètre intérieur au moins égal à 19 mm et du type comprenant au moins un film (12) en un matériau rigide, à module d'élasticité élevé et formant barrière d'étanchéité au liquide ou au gaz transporté, ledit film (12) étant enrobé d'au moins un film intermédiaire (14) et d'un corps (16a,16b) en un matériau à faible module d'élasticité, tel qu'un élastomère synthétique, qui donne la souplesse requise au tuyau, ledit corps (16a,16b) du tuyau comprenant une spirale (18) en matériau thermo-plastique pour compléter la protection du film barrière (12), caractérisé en ce que le film intermédiaire (14) est réalisé en un matériau qui est choisi de manière à ce que son module d'élasticité est inférieur à celui du film barrière (12) et supérieur à celui du corps (16a,16b), et en ce qu'il est constitué, de l'intérieur vers l'extérieur :
- par un film thermoplastique (10) d'une épaisseur de l'ordre de 0,3 mm et en un matériau du type polyéthylène,
- par un film barrière (12) constitué d'un copolymère éthylène vinyl alcool et d'une épaisseur de l'ordre de 35 microns,
- par un film intermédiaire (14) d'une épaisseur de l'ordre de 0,3 mm et de même constitution que le film (10),
- par une sous-couche (16a) en un matériau élastomère synthétique adhérée au film intermédiaire (14) et d'une épaisseur de l'ordre de 2 mm,
- par une tresse textile (20) en fils de polyester,
- par un revêtement (16b) en un matériau élastomère synthétique d'une épaisseur de l'ordre de 3 mm, et
- par une spirale thermoplastique (18) d'une hauteur de l'ordre de 3mm, avec un pas de l'ordre de 10 mm, enchassée dans le revêtement (16b) et parfaitement adhérée à celui-ci.

2. Tuyau souple selon la revendication 1, caractérisé en ce que le film (12) formant barrière d'étanchéité a un module d'élasticité supérieur à 3000 daN/cm².

3. Tuyau souple selon la revendication 1 ou 2, caractérisé en ce que le film intermédiaire (14) est choisi dans le groupe comprenant notamment les polyéthylènes, les polyamides, les polyvinyles chlorés et les polypropylènes.

4. Tuyau souple selon la revendication 4, caractérisé en ce que le module d'élasticité du film intermédiaire (14) est inférieur à 3000 daN/cm².

## Patentansprüche

1. Schlauch zum Fördern von Flüssigkeiten, insbesondere flüchtigen Flüssigkeiten, oder von Gasen,
wobei der Schlauch einen großen Innendurchmesser von mindestens 19 mm aufweist und der Art nach mindestens eine Schicht (12) aus einem starren Material aufweist, welche ein erhöhtes Elastizitätsmodul besitzt und eine Dichtungssperre für die geförderte Flüssigkeit oder das geförderte Gas bildet, wobei die genannte Schicht (12) von mindestens einer Zwischenschicht (14) und von einem Körper (16a, 16b) aus einem Material, beispielsweise einem synthetischen Elastomer, mit geringem Elastizitätsmodul umhüllt ist, der dem Schlauch die geforderte Weichheit verleiht,
wobei der genannte Körper (16a, 16b) des Schlauches eine Spirale (18) aus thermoplastischem Material aufweist, um den Schutz der Sperrschicht (12) zu vervollständigen,
dadurch **gekennzeichnet,**
daß die Zwischenschicht (14) aus einem Material gebildet ist, welches derart gewählt ist, daß sein Elastizitätsmodul geringer ist als der der Sperrschicht (12) und höher als der des Körpers (16a, 16b), und
daß er von innen nach außen gebildet ist:
- durch eine thermoplastische Schicht (10) mit einer Dicke in der Größenordnung von 0,3 mm und aus einem Material nach Art von Polyethylen,
- durch eine Sperrschicht (12), die durch ein Ethylen-Vinylalkohol-Copolymer gebildet ist und eine Dicke in der Größenordnung von 35 µ aufweist,
- durch eine Zwischenschicht (14) mit einer Dicke in der Größenordnung von 0,3 mm und derselben Beschaffenheit wie die Schicht (10),
- durch eine Unterlage (16a) aus einem synthetischen elastomeren Material, die an der Zwischenschicht (14) anhaftet und eine Dicke in der Größenordnung von 2 mm aufweist,
- durch eine geflochtene Textillage (20) aus Polyesterfäden,
- durch eine Verkleidung (16b) aus einem synthetischen Elastomermaterial mit einer Dicke in der Größenordnung von 3 mm, und
- durch eine thermoplastische Spirale (18) mit einer Stärke in der Größenordnung von 3 mm und einer Ganghöhe in der Größenordnung von 10 mm, die in die Verkleidung (16b) eingelassen ist und vollständig an dieser anhaftet.

2. Schlauch nach Anspruch 1, dadurch **gekennzeichnet,** daß die Schicht (12), welche die Dichtungssperre bildet, einen Elastizitätsmodul aufweist, der größer als 3000 daN/cm² ist.

3. Schlauch nach Anspruch 1 oder 2, dadurch **gekennzeichnet,** daß die Zwischenschicht (14) aus der Gruppe ausgewählt ist, die insbesondere die Polyethylene, Polyamide, Polyvinylchloride und Polypropylene umfaßt.

4. Schlauch nach Anspruch 4, dadurch **gekennzeichnet,** daß der Elastizitätmodul der Zwischenschicht (14) geringer ist als 3000 daN/cm².

## Claims

1. A flexible pipe for conveying liquids, particularly volatile liquids or gases, having a large inside diameter of at least equal to 19 mm and of the type comprising at least one film (12) of a rigid material, of a high elasticity modulus and forming a barrier which is sealing-tight in respect of the liquid or gas being conveyed, the said film (12) being coated in at least one intermediate film (14) and a body (16) of a material having a low elasticity modulus, such as a synthetic elastomer, which imparts the required flexibility to the pipe, the said pipe body (16a, 16b) comprising a spiral (18) of thermoplastics material to complete protection of the barrier film (12), characterised in that the intermediate film (14) is of a material which is so selected that its elasticity modulus is lower than that of the barrier film (12) and greater than that of the body (16a, 16b) and in that, from the inside outwards, it is constituted:
- by a thermoplastics film (10) of a thickness of around 0.3 mm and of a polyethylene type material,
- by a film barrier (12) constituted by an ethylene vinyl alcohol polymer and having a thickness of around 35 µm,
- by an intermediate film (14) of a thickness of around 0.3 mm and constituted in the same way as the film (10),
- by a sub-layer (16a) of a synthetic elastomeric material which adheres to the intermediate film (14) and of which the thickness is around 2 mm,
- by a textile braid (20) consisting of polyester threads,
- by a coating (16b) of a synthetic elastomeric material having a thickness of around 3 mm, and
- by a thermoplastics spiral (18) around 3 mm high with a pitch of around 10 mm, chased into the coating (16b) and adhering perfectly to this latter.

2. A flexible pipe in accordance with claim 1, characterised in that the film (12) which forms a sealing-tight barrier has an elasticity modulus which is greater than 3000 daN/sq.cm.

3. A flexible pipe according to claim 1 or 2, characterised in that the intermediate film (14) is selected from the group comprising in particular the polyethylenes, the polyamides, the chlorinated polyvinyls and the polypropylenes.

4. A flexible pipe according to claim 4, characterised in that the elasticity modulus of the intermediate film (14) is less than 3000 daN/sq.cm.
